# EUROPEAN PATENT APPLICATION

(11) **EP 2 764 801 A1**
(43) Date of publication of application: **13.08.2014**
(21) Application number: 11873618.0
(22) Date of filing: 07.10.2011
(51) Int. Cl.: A47J 31/36, A47J 31/06

(54) **DEVICE FOR PREPARING AND DISPENSING A LIQUID INFUSION FOR PROFESSIONAL COFFEE MACHINES**

(71) Applicant: Crem International Spain S.L., 46701 Gandía (Valencia) (ES)
(72) Inventor: LLORET SUCH, Francisco Vicente, E-46701 Gandía (Valencia) (ES); BERBEGALL COTAINA, Salvador, E-46701 Gandía (Valencia) (ES)
(74) Representative: Gil-Vega, Victor
(86) International application number: PCT/ES2011/070700
(87) International publication number: WO 2013/050631

(57) **Abstract**

The device includes a capsule holder (10) intended for a capsule (11) which contains a dose of the product, (for instance, coffee), which will serve to obtain a liquid infusion. The device can be used with professional coffee machines, and the capsule holder (10) is mounted so that it can be moved following a linear and turning motion for the ejection of the capsule (11) after its use, and for the insertion of a new capsule arranged in front of a fixed support (2) through which the water for the preparation of the infusion flows. Before the capsule (11) a pre-chamber has been foreseen to obtain a uniform passing of the water through the whole mass of the infusion product contained inside the capsule (11). The invention also comprises a sealing joint (12) between the coupling of the capsule holder (10) and the fixed support (2), a perforating plate (15) with a capsule perforating system and a final emulsifying mechanism, incorporating a check valve and a chamber (18) to obtain an homogeneous creamy foam, with a natural aspect, on the infusion obtained.

## Description

### OBJECT OF THE INVENTION

The present invention relates to a device for the preparation and dispensing of a liquid infusion for professional coffee machines, and although it has been especially conceived for its specific application to coffee machines, we cannot discard its use for the preparation of other types of infusions, such as tea and similar beverages, wherein the infusion is obtained from a capsule which contains the product used to prepare the infusion, such capsule being applied to a manually-operated capsule holder which can be coupled to the relevant machine.

The object of the invention is to allow the preparation and dispensing of a liquid infusion, for instance coffee, using a series of capsules whose format is similar to the format used in domestic machines, thus allowing their use in machines at professional level, with a level of use, reliability and quality well above those provided by the means conventionally used.

### BACKGROUND OF THE INVENTION

The domestic machines used to dispense coffee infusions from a capsule containing a dose of ground coffee are widely known in the art. Such capsules have a specific format and provide a coffee infusion of a good quality, and they are also sufficiently reliable for domestic use. However, their design has not been adapted to the demanding quantitative requirements of professional use.

It is also known in the art the existence of professional and industrial machines which provide coffee infusions based on capsules of a similar or different format, and that are incipiently being introduced within the professional market.

The capsule holding devices are formed by parts with a structure, preferably made of plastic, which is scarcely resistant.

On the other hand, the capsule holders or capsule holding devices currently known, as well as their own capsules, raise different problems and disadvantages when preparing the coffee infusion, and when this latter is served.

Specifically, the water used to prepare the infusion reaches the capsule holder under a pressure of 8-9 bars or even higher, so that when the water reaches the coffee, it may happen, and actually happens very frequently, that it finds a way that offers less resistance against the passing through such mass of coffee, owing to the lack of uniformity of the distribution of the coffee throughout the capsule. Consequently, the water will circulate through that channel, and not uniformly through the whole mass of coffee, which entails a loss of coffee quality, since not all its properties have been extracted.

It is also important to highlight the fact that, in the case of the conventional devices used for the obtaining of coffee infusions, it is necessary to inject some air to obtain the classical final creamy foam in the coffee thus obtained, and consequently, the cream may not have an uniform aspect, i.e., it could not look natural.

A great number of devices related to the device of the invention are known. In this context, the European patent 2342224 could be mentioned, which describes a device for the preparation and dispensing of a liquid infusion (coffee, tea or similar beverages), which includes a capsule containing a dose of the product to be infused, such capsule being coupled inside a removable capsule holder which contains means to perforate the base of the capsule, while in front of the capsule holder there is a fixed support with means to perforate the closing foil of the capsule, to allow the flow of water inside the capsule and, consequently, the passing of such water through the dose of the product contained inside the capsule, for the subsequent preparation of the infusion.

In this European patent document No. 2342224, the motion of the capsule follows a linear path, without tilting, which does not allow an easy and comfortable coupling and/or removal of the capsule from the capsule holder itself. Furthermore, the infusion obtained is of a poor quality, since no appropriate means is available that allows an even distribution of the water when passing through the mass of the product contained within the capsule, i.e., the coffee, and neither there are means that allow obtaining a creamy foam with an appropriate aesthetic appearance and a proven quality.

Furthermore, the document US 2005103202 A1 can also be mentioned, which describes a device for the preparation of an infusion of coffee or similar beverage from a dose of ground coffee contained within a capsule, such device comprising a water pre-chamber which is connected to the capsule that contains the product, trying to obtain an homogeneous uniformity of the water that flows through the mass of the product. However, such pre-chamber has no means to perforate the capsule, in order to achieve the penetration or inflow of water, in an uniform manner, inside the capsule that contains the product.

We could also mention document WO 2011015978, which describes a series of means for the positioning of the capsule containing the product in an operating or in an idle position, although such means do not allow the appropriate displacement that allows to place the capsule within the capsule holder in a comfortable, easy and fast manner.

Furthermore, none of the documents which have been previously mentioned describes the insertion of waterproof means between the capsule holder and the capsule itself, and between such capsule holder and the fixed part of the device through which the water is supplied to the capsule.

### DESCRIPTION OF THE INVENTION

The device which is hereby described has been designed to solve the problems indicated above, on the basis of a simple, but efficient solution.

Specifically, the device according to the invention shows a structure comprised by two rigid and strong plates, preferably made of stainless steel, forming two ribs among which a series of means related to the relevant capsule holder can be moved, and to that effect, a pair of slots has been made on each one of such side plates, each one of them having an angled layout, comprising an end section for the linear motion and another cross and arched section that allows a turning motion, such slots configuring guides for pins which comprise bearings for the capsule holder itself, so that such bearings are preferably made of stainless steel and allow the perfect orientation and guidance of the capsule holder and, consequently, of the capsule.

On the basis of the slots that configure the aforementioned guides, a linear back and forth linear motion of the pins and bearings assembly, and therefore, of the capsule holder itself, is achieved, in combination with a turning motion at the final part of the travel, thus allowing the correct positioning of the capsule holder to achieve a comfortable arrangement, so that the user may, on the one hand, place the capsule on the capsule holder, and eject the capsule once it has been used, on the other hand.

The device also includes a pre-chamber which has been provided before the capsule itself, and which comprises a fixed support on which the capsule holder may be coupled, inserting a sealing joint which will be commented hereinafter, such pre-chamber being foreseen to avoid the problem posed by conventional devices when distributing the water, in an uniform and homogeneous manner, through the whole mass of the product, or the coffee whose infusion is sought.

To that effect, it has been foreseen that, inside such pre-chamber, the water passes through a 0.5 / 0.75 mm nozzle, to limit or regulate the flow rate of water, with the peculiarity that the water reaches the mass of coffee contained inside the capsule through a needle, in a way in which the dry mass of the product or coffee will be gradually soaked with un-pressurised water, thus achieving that the water drags all the aromatic and tasty properties of the product contained inside the capsule.

The coupling between the capsule holder and the fixed support through which the water from the supply tank reaches the pre-chamber and, consequently, the capsule that contains the infusion product shows the peculiarity that when the product is in the closing position, i.e., when it is in the coupling position between the capsule holder and the fixed support, a total sealing is achieved, despite the slight linear movements caused as a result of the pressures present.

Furthermore, such joint comprises a lip which is in contact with the capsule, thus guaranteeing the sealing in the opposite direction.

Such sealing joint can be easily assembled and disassembled, thanks to the linear and turning motion of the capsule holder, so that, during the maintenance operation and even when the capsule holder is in its opening position, the joint can be easily replaced without the need for any specific tool, and the capsule can be changed, i.e., ejected after its use and another full capsule can be mounted on or coupled to the capsule holder.

Another innovative characteristic which is applicable to certain types of capsules is that perforating means have been foreseen on the rear part, which are simultaneously used as filtering means for the infusion obtained, the perforating means being based on needles or pointed stainless steel means, which allow the water to pass through and to extract the grease of the product or coffee, but not the grounds of such coffee. In other types of capsules, it is necessary to poke them with a single needle without filtering means, while in the case of other models, there is no need for any poking or filtering system.

Finally, it is necessary to state that the water already dragged with the properties of the product, i.e., with the infusion obtained, reaches an emulsifying mechanism comprising a check valve adjusted to reach a pressure of 4-5 kg, wherein the shutter is preferably made of Teflon and is arranged in a position which firmly presses, by means of a stainless steel spring, the opening between the capsule and the emulsifying mechanism itself.

It should be highlighted that the said emulsifying mechanism includes a chamber which allows distributing the passing of water calculated to provide the retention of the infusion, so that when this latter leaves the duct which communicates with the emulsifying mechanism, and as a result of the pressure, strong turbulences occur inside the chamber, thus emulsifying the part of the infusion retained inside the chamber, which gives right to the creamy foam of the coffee, which is simply caused by the release of the CO₂ dissolved and released during the extraction of the coffee.

The advantage entailed by this emulsifying mechanism is that a coffee cream is obtained thanks to the CO₂ released from the coffee itself, and not by means of an injection of air, as it is usually the traditional case, the final outcome being the obtaining of a uniform cream with a very natural aspect.

Finally, the emulsifying mechanism flows into a ramp in the shape of a cone-shaped trumpet which leads the coffee towards the container or recipient where the infusion will be collected, so that, as a result of the gradual increase of the trumpet-shaped section of the conical ramp, while the coffee or infusion moves forward towards the outlet, the speed is decreased, and the infusion gently falls on the appropriate ducts, so that the coffee emulsion (cream) is not broken.

As far as the mechanical actuation means used to move the capsule holder, and the capsule itself, for ejection and coupling purposes is concerned, such means consist of a manually-operated lever so that the tilting of such lever towards the opening position entails a linear motion, in the opposite direction to the fixed support of the device, i.e., a travel is established towards the rear part which is calculated so that, when the front part is completely opened, there will be a rear bumper allowing the mechanical motion of the capsule towards the exterior, and the capsule will simply fall by the effect of gravity, obviously in the opening position or during the backwards motion previously mentioned.

Furthermore, during the final section where the arched part is found, the capsule holder is subject to a turning motion which allows the introduction of a new capsule containing the product used to obtain the infusion.

This way, and as a result of the previously mentioned characteristics of the device, the concept of capsules, which were initially conceived for domestic machines, may be extended to professional or industrial machines, obtaining an optimum coffee quality, as a result of the great thermal stability found in the machines intended for professional use.

We also must highlight the fact that, on the basis of the characteristics of the device, the operator or technician may easily access the machine to perform the maintenance works, which are much more easier than in the case of domestic machines, including the replacement of the sealing joint, without the need to disassemble any of the components, and allowing the replacement of the full assembly simply by previously removing the side plate which forms the structure of the device itself.

### DESCRIPTION OF THE DRAWINGS

To complement the present description, and in an effort to contribute to a better comprehension of the characteristics of the invention, according to a preferred practical embodiment of such invention, a set of drawings has been attached as an integral part of such description, where for illustration purposes and without limitation, the following has been represented:

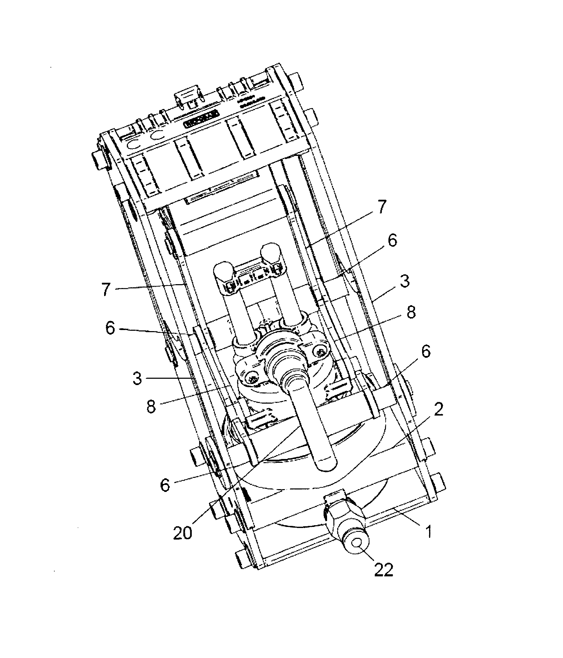

Figure 1.- Shows a lower plan perspective view of the device assembly according to the object of the invention.
Figure 2.- Shows a side elevation view of one of the side plates comprising the general structure of the device, where the two slots or guides made on such plate are clearly shown, as well as the manual operation lever.
Figure 3. - Shows a view where the cams are shown in the closed position, and where the floating supports x, y, z can be appreciated.
Figure 4.- Shows a longitudinal section of the assembly shown in the previous figure, where all the essential characteristics of the device can be appreciated.

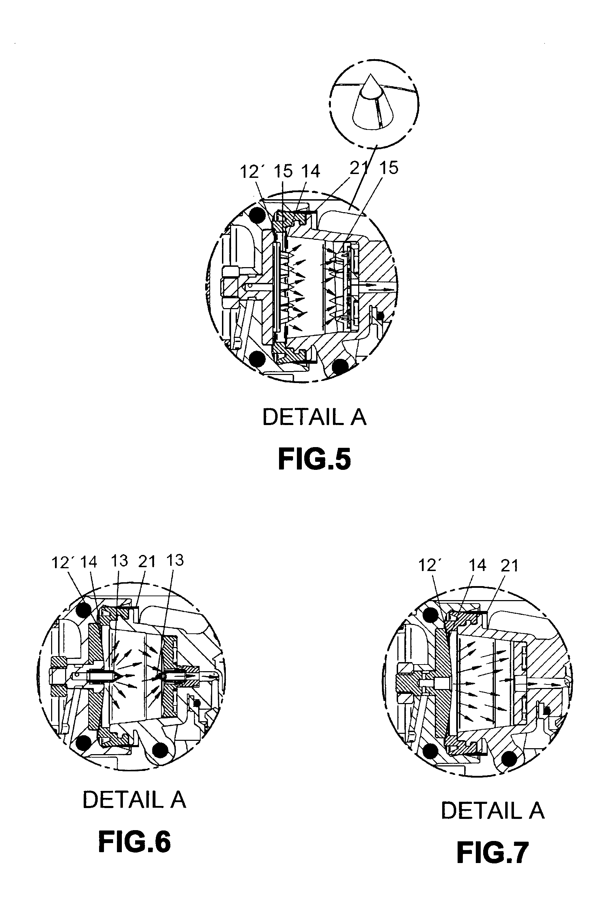

Figure 5.- Shows a detailed view of the content of the circle (A) of the previous figure, which corresponds to the method for the preparation of the infusion or the passing of water through the capsule which contains the product. This view clearly shows the construction of the perforating plate, consisting of a technical high-quality plastic disc with conical projections with orifices for the insertion, under pressure, of stainless steel needles, which is assembled in such a way that when the needles are mounted within their housings, a series of slots are available in the longitudinal direction of the needle, that have a width of only 0.25 to 0.30 mm and allow the passing trough of the grease extracted from coffee, but prevent the passing of the coffee grounds.
Figure 6.- Shows a detailed view of the content of the circle (A) of figure 4, implementing another system wherein the capsule is perforated by a single needle.
Figure 7.- shows a detailed view of the contents of the circle (A) of figure 4, where a capsule which does not require to be perforated has been represented.
Figure 8.- Shows a detailed view of the contents of the circle (B) of figure 4 wherein the emulsifying mechanism can be appreciated, with the respective components numbered.
Figure 9.- Shows a side elevation view of the assembly shown in Figure 1, in a position of backwards linear motion for the ejection of the capsule, once it has been used.
Figure 10.- Shows a side elevation view similar to the previous figure, but at the turning motion stage of the capsule holder, to allow the insertion of a new capsule on the capsule holder.

### PREFERRED EMBODIMENT OF THE INVENTION

As it can be appreciated in the above-mentioned figures, the device according to the invention has been conceived to be a part of a fixed support (2) comprising the relevant nozzle (22) for the inlet of the water required to obtain the infusion desired, so that such fixed part (2), along with the lid (1) forms part of the general structure of the device, which is basically formed by a pair of side and rigid plates (3), that are preferably made of stainless steel, where a pair of guides have been made, consisting of two slots (4 and 5), wherein the bearings (6) of the relevant cross pins arranged between the rigid plates (3), may slide both in a linear motion and in a subsequent turning motion, such pins and bearing (6) assembly being arranged in connection with connecting rods (7 and 8) that can be operated by means of a manual lever (9).

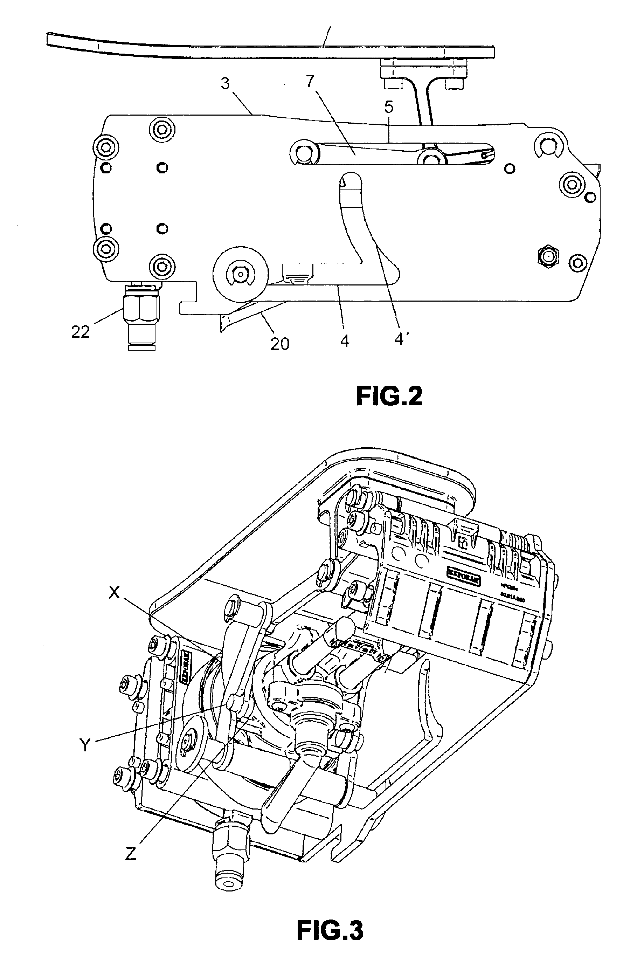

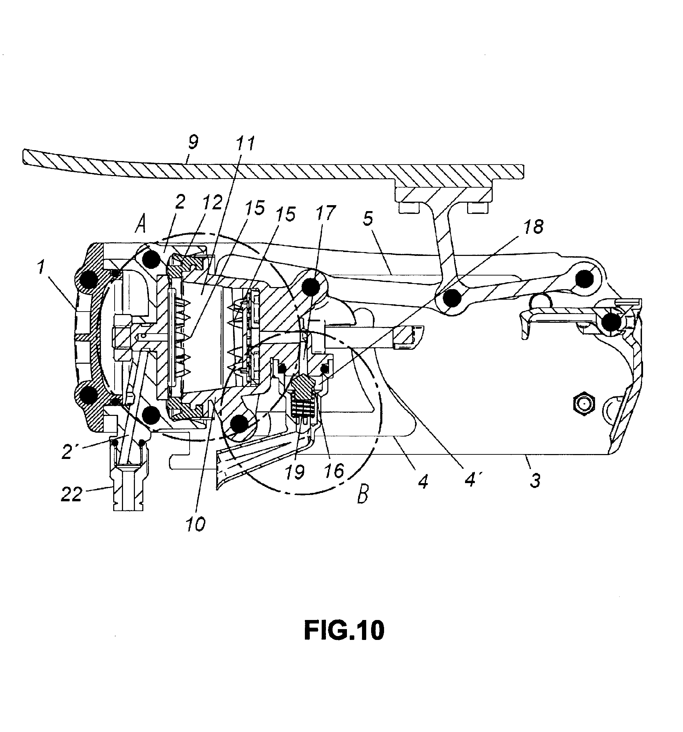

Each side guide (4) shows a straight and longitudinal section which corresponds to the reference numeral (4), as shown in figures 2, 4, 9 and 10, and an arched section (4') which forms an angle with the longitudinal section (4), the section (4') being considered as transversally arranged with respect to the section (4) of the relevant guide, while the other guide (5) is longitudinally arranged.

Thus, the pins and bearings (6) corresponding to the capsule holder (10) may slide through the guides (4 and 5), firstly in a linear manner through the longitudinal section of both guides, and finally, in a turning motion through the section (4') of the guide (4), to perform the function that will be hereinafter explained.

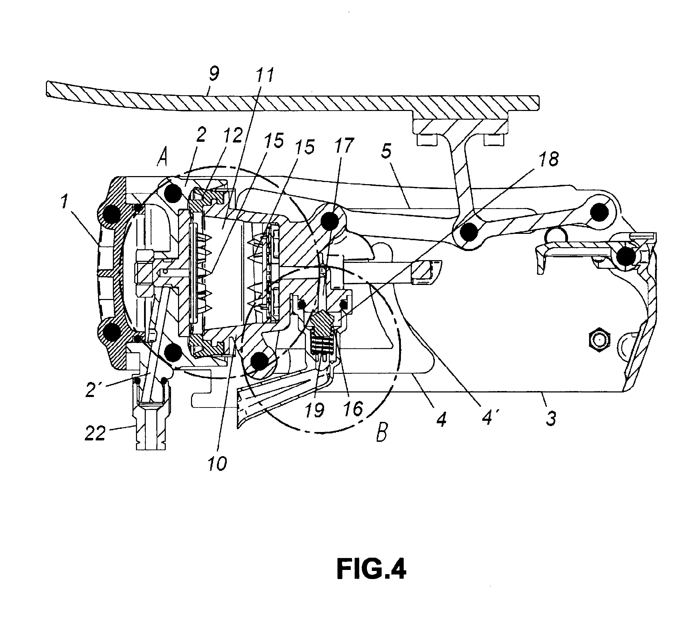

During the back and forth movement, the capsule holder (10) may be coupled to the fixed support (2) to prepare the infusion or to eject the relevant capsule (11) which contains the product which is to be infused, and whose capsule (11) is placed on the capsule holder itself (10), as it can be seen in figures 4 and 5.

Thus, at such coupling between the capsule holder (10) and the fixed support (2), a sealing joint (12) has been provided to obtain a waterproof seal between the fixed support (2) and the capsule holder (10) in the closing position, i.e., in the position for the preparation of the infusion, and simultaneously, such sealing joint (12) includes an inner lip (12') which is also adjusted in a watertight manner against the capsule (11) itself, thus increasing the degree of water tightness between the fixed support (2) and the capsule (11). The joint assembly is fixed in position by means of a metal ring (21) which prevents that the joint (12) gets out of the housing during the repetitive opening and closing movements of the group, such ring being fixed in position by the cams of the lever (8) as it can be appreciated in Figure 3, reference x.

The fixed support (2), at the water inlet nozzle (22), has a duct (2') for the inlet of water, such water reaching a pre-chamber before reaching the inside of the capsule (11), wherein such pre-chamber houses a series of perforating means (13) or (15) to perforate the closing slip (14) of the capsule (11), such perforating means (13) or (15) being comprised by a perforating plate or needle, as it can be clearly appreciated in the detailed views of figure 5 and figure 6.

The closing slip or film (14) of the capsule (11), and the mass of coffee contained inside the capsule prevent the passing of water, thus increasing the pressure, so that, while the capsule (11) is gradually filled with water, the water will also enter such pre-chamber, whereby the coffee contained in the capsule (11) will be gradually soaked with water allowing the increase of the volume of the dry mass of such product, forming an homogeneous mass, which offers a uniform resistance to the passing of water, thus allowing that all the aromatic and tasty properties of the product are retained.

While the above-mentioned pre-chamber is gradually being filled, the pressure increases, so that when the pressure at which the pump is regulated is reached, the bottom of the capsule (11) is perforated by a series of perforating means similar to needles (15) or (13) that are located at the lower side, and the infusion begins to flow, as it can be seen in the detailed views of figs. 5 and 6, without the need for perforating means, as it can be appreciated in figure 7.

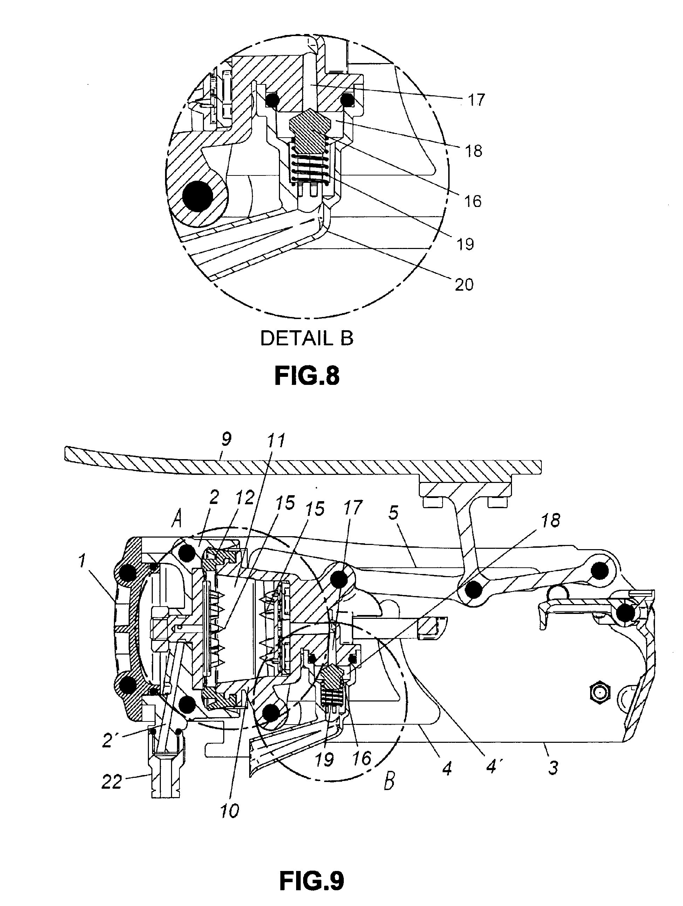

The device also includes an emulsifying mechanism based on a calibrated check valve which includes a shutter (16) which closes the duct (17) that is connected to the perforations made by the needles (15) or (13) on the base of the capsule (11), such shutter (16) being forced towards a closing position, as it can be seen in figure 8, by means of a spring (19).

At the outlet of the duct (17) a chamber (18) has been provided to retain part of the infusion obtained, so that when the shutter (16) is opened, the outlet pressure exercised through the duct (17) creates a turbulence inside the chamber (18) and consequently, within the part of the infusion retained inside that chamber, creating an emulsion to obtain the so-called infusion or coffee cream, with a natural aspect and optimum quality.

At the outlet of the aforementioned valve, or in other words, at the end of the above mentioned device or emulsifying mechanism, a ramp in the shape of a conical trumpet (20) has been provided to duct the coffee towards the relevant recipient or container of such coffee, so that the gradual increase in the diameter of the trumpet or conical ramp (20) entails the gradual decrease of the output speed of the infusion, so that it may gently fall on the relevant ducts and the emulsified product or infusion cream previously obtained are not broken.

## Claims

1. Device for the preparation and dispensing of a liquid infusion for professional coffee machines, using a capsule (11) containing a dose of the ground product, which can be coffee, tea, or similar beverages whose infusion is sought, such capsule (11) being mounted in a disposable way on a capsule holder (10) which can be moved by means of a manually operated lever (9), the capsule holder (10) being arranged in front of a fixed support (2) through which water passes towards the capsule (11), to obtain the infusion, **characterized in that** the capsule holder (10) is assembled so that it can be moved following a linear and turning motion between a pair of rigid side plates (3), comprising guides (4 and 5) where a series of pins and bearings (6) of the capsule holder (10) itself have been coupled in a sliding manner; wherein the fixed support (2) accessed by the water used for the infusion includes a pre-chamber and the supporting system of the perforating plate (15) or a needle (13) through which water is injected inside the capsule (11) which contains the dose of the infusion product, achieving a uniform distribution of such water throughout the whole mass of the product dose; with the peculiarity that the seat of the capsule holder (10) also incorporates in front of the base of the capsule (11), a series of needles (15) or (13) to perforate the base of the capsule (11) itself, to allow the passing and filtering of the infusion thus obtained towards an emulsifying mechanism through which the infusion is ducted towards the relevant container of such infusion.

2. Device for the preparation and dispensing of a liquid infusion for professional coffee machines according to claim 1, **characterised in that** the guides provided in the side plates (3) for the sliding and turning motion of the pins and bearings assembly (6) of the capsule holder (10), are formed by two slots on each side, wherein one of the slots (4) follows an angle path with an axial and straight front section and a cross and arched rear section (4'), while the other slot (5) is straight.

3. Device for the preparation and dispensing of a liquid infusion for professional coffee machines according to claims 1 and 2, **characterized in that** the pins with bearings (6) of the capsule holder (10) are coupled to the relevant manually operated lever (9) through a series of articulated connecting rods (7 and 8), allowing the linear axial movement simultaneously to the turning motion, and the anchoring of the holder in the closed position, with the supports x, y, z.

4. A device for the preparation an dispensing of a liquid infusion for professional coffee machines according to claim 1, **characterised in that** the coupling edge existing between the capsule holder (10) and the fixed support (2) for the inlet of water inside the capsule (11) incorporates a detachable sealing joint (12) which seals the space between such fixed support (2) and the capsule holder (10), incorporating such sealing joint (12) a front lip (12'), which establishes a waterproof space between the capsule (11) itself and the fixed support (2) and a lower adjusting lip which rests against the capsule (12') its positioning being ensured by the metal ring (21).

5. A device for the preparation an dispensing of a liquid infusion for professional coffee machines according to claim 1, **characterised in that** the emulsifying mechanism comprises a calibrated check valve, assisted by a spring (19) which tends to push the shutter (16) against the outlet duct (17) of the infusion, such emulsifying mechanism comprising a chamber (18) to retain part of the infusion, so that when leaving the chamber through the duct (17), under pressure, such part of the infusion is subject to turbulences inside the chamber (18) obtaining a uniform cream with a natural aspect.

6. A device for the preparation an dispensing of a liquid infusion for professional coffee machines according to claim 5, **characterised in that** the emulsifying mechanism includes, after the valve, a ramp section which is determined by a conical trumpet shape (20), through which the speed of the infusion flow is gradually reduced during the course towards the exit through such ramp section in the shape of a conical trumpet (20).

7. A device for the preparation and dispensing of a liquid infusion for professional coffee machines according to claim 1, **characterized in that** the perforating plate (15), which is made of high quality plastic material, reinforced with stainless steel needles, incorporates slots of 0.25 to 0.30 mm that retain the coffee grounds and allows the passing of the water infusion with the coffee extracts.
